# EUROPEAN PATENT SPECIFICATION

(11) **EP 0 545 970 B1**
(45) Date of publication and mention of the grant of the patent: **21.12.1994**
(21) Application number: 91914645.6
(22) Date of filing: 16.08.1991
(51) Int. Cl.: A47J 31/08

(54) **METHOD OF MANUFACTURING FILTER BAGS AND A FILTER BAG**
VERFAHREN ZUR HERSTELLUNG VON FILTERBEUTELN UND EIN FILTERBEUTEL
PROCEDE DE FABRICATION DE FILTRES ET FILTRE AINSI PRODUIT

(30) Priority: 29.08.1990 FI 904264
(43) Date of publication of application: 16.06.1993
(73) Proprietor: AHLSTROM CONSUMER PRODUCTS LTD., SF-27501 Kauttua (FI)
(72) Inventor: MARS, Vesa, SF-00140 Helsinki (FI)
(74) Representative: Füchsle, Klaus, Dipl.-Ing.
(86) International application number: FI9100256
(87) International publication number: WO9203958

(56) References cited:
- EP-A- 0 107 174
- CH-A- 458 663
- CH-A- 460 280
- DE-A- 1 906 464
- FR-A- 2 503 033
- SE-B- 339 387

## Description

The present invention relates to a method of manufacturing filter bags and a filter bag or pouch. These bags or pouches are specially used for making of filtered coffee.

It is known to produce filter bags from sheet material, which is folded and then crimped and cut to produce a trapezoidal shaped filter bag with seams along the shorter and one adjoining edge, the fold forming the other adjoining edge.

A problem in previous methods of manufacturing filter bags has been the great amount of process waste. The percentage loss of filter material can be as high as 40%.

SE 339 387 or US-A-3 437 540 and FR 2503033 disclose methods, by means of which the loss of the filter material has been tried to reduce.

FR 2503033 discloses a method, in which two webs of paper are superimposed and lines of filter bags are formed and cut from the webs. Said lines are parallel to the running direction of the web. In each line successive filter bags are attached to each other in such a way that the top edge of one hag is bound to the bottom edge of another bag. The shape of each filter bag is defined by a straight bottom edge connected by sloping side edges to a top edge, which consists of a central part of the same size as the base and parallel to it and of two sloping segments, which connect said central part to the sides.

SE 339387 or US-A-3 437 540, discloses a method of making filter bags, in which method two sheets of filter material are superimposed, and the sheet layers are joined together along seams forming the seams of the filter bags and defining rows of trapezium-shaped filter bag blanks, positioned opposite to each other. The filter bags are connected to each other along sloping side edges in each row. The openable top edge of the filter bag according to this document is a circular arc and the bottom is substantially straight.

The loss of material in the two known methods is, however, still too high. In the method of SE 339387, the waste material is formed between the rows of the filter bags and at the margins of the webs. In the method of FR 2503033 waste material is formed to a large extent at the margins of the webs.

The object of the present invention is to provide a method and a filter bag which considerably reduce the loss of material and thus reduce manufacturing costs. This object is solved by a method of manufacturing filter bags including the features of claim 1 and by a filter bag of claim 3.

What is achieved with the new cutting pattern and shape of the filter bag according to the invention is that there will be no loose slips between the filter bag blanks and thus the loss of material is kept to a minimum.

According to the invention the cutting pattern is sinusoidal. The invention is, however, by no means limited to only this cutting pattern, but any other waveform is also possible, by means of which the object of this invention can be achieved.

According to one embodiment of the present invention, the desired pattern can be embossed into one or both of the filter material sheets before joining the sheets together. Thus a filter bag according to the invention can inside it have embossed, for example, a scale for measuring the correct amount of coffee or an emblem of the manufacturer.

In the method according to the invention the filter material is supplied from two rolls of paper, the width of which is preferably about 1 meter. The great width enables a larger production volume than previous methods. Less machinery and therefore less personnel is required to obtain large production volumes, which together with a smaller loss of material reduces production costs.

The present invention is described in closer detail by referring to the enclosed schematic figures, in which:

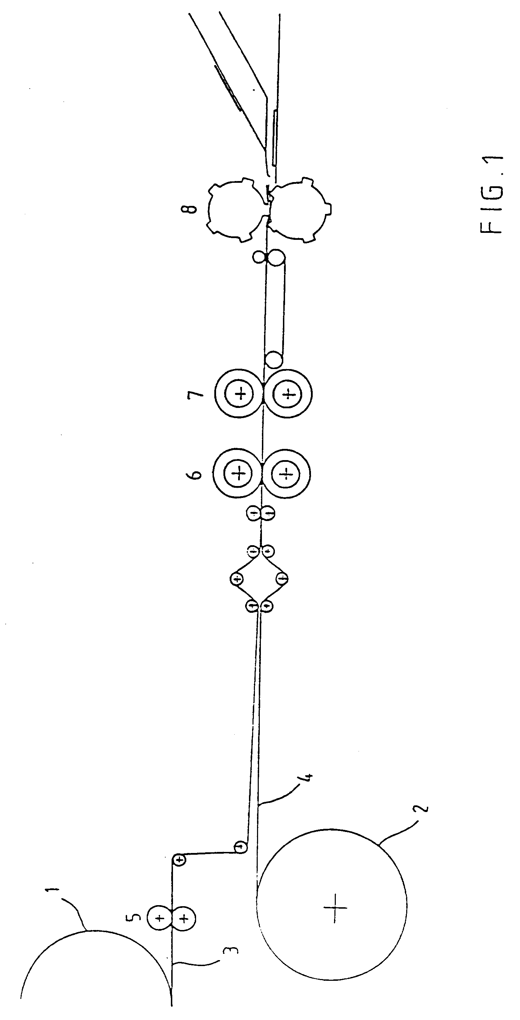

FIGURE 1 is a side view of the apparatus for carrying out the method according to the invention
FIGURE 2 is the apparatus in FIGURE 1 as seen from above
FIGURE 3 represents a filter bag according to the invention

The filter paper sheet is supplied from two rolls 1 and 2 of paper. A measuring scale, an emblem of the manufacturer or another desired text 22 is embossed into one of the sheets 3 with the apparatus 5. The sheets 3 and 4 are then superimposed in a way disclosed in prior art and joined together along the straight side seams 10 and 12 and the curved bottom seam 11 of the filter bags by crimping roller 6, thus defining filter bag rows 21, immediately bordering on each other. The neighbouring rows share a common dividing line between them, formed in turn by the top edge 15 and in turn by the bottom edge 16 of the neighbouring filter bags, positioned opposite to each other. After that a roll cutter 7 cuts off the filter bags 20 along their curved top 15 and bottom 16 edges in a sine-wavelike form, and along the straight edges 13 and 14. After the cutting the filter bags are sorted 8 into "right hand" and "left hand" groups for subsequent inspection and packing.

The straight edges 13 and 14 of the bag 20 can be perforated instead of cut, thus obtaining rows 21 of filter bags attached to each other at their straight edges, and from which a bag can be torn off. This could be a preferable solution for those consuming large amounts of filter bags. The filter bags can also be perforated differently in order to obtain different groups of filter bags.

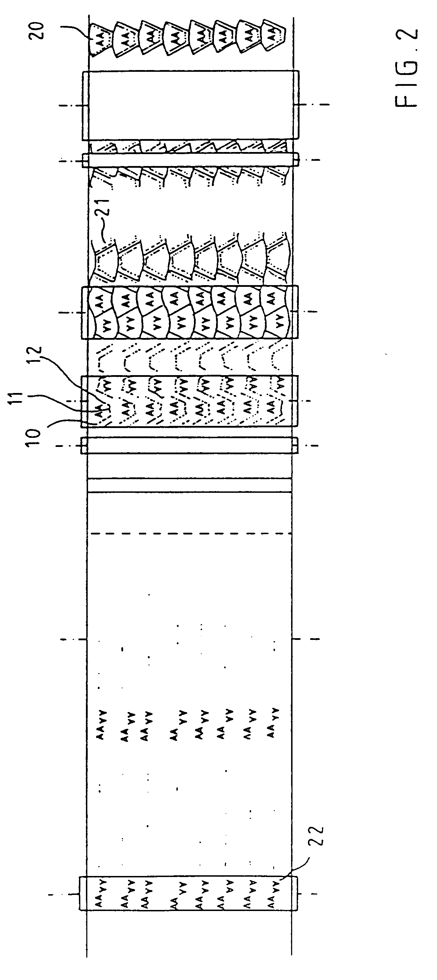

When utilizing a method according to the invention, no loose slips are defined between the filter bag blanks, e.g. there is only a minimal amount of process waste, as is clearly disclosed in Figure 2. Only between the edges of the outermost rows and the edges of the paper sheet will some waste material be formed. When producing usual sizes of filter bags, the material loss is only 4-5 %.

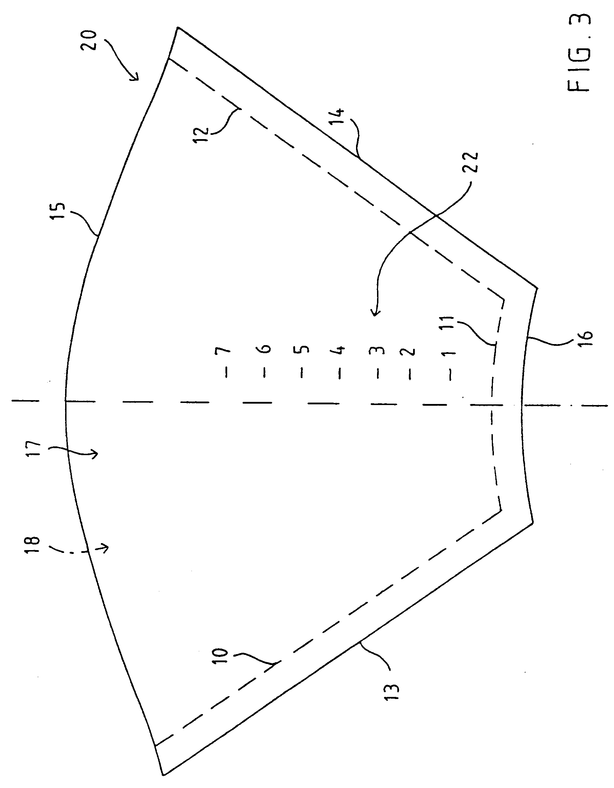

A filter bag 20 according to the invention (FIG. 3), having a preferable shape, comprises two superimposed layers 17 and 18 of paper. The layers are joined together along the bottom 16 and the straight edges 13 and 14 with seams 10, 11 and 12. The wave-like top edge 15 is open. A measuring scale 22 has been embossed into the filter bag.

## Claims

1. A method of manufacturing trapezium-shaped filter bags having a curved upper edge (15), a curved bottom edge (16) and two straight side edges (13, 14) which diverge from the bottom edge to the upper edge,
in which method filter bag blanks are formed by
- superimposing two layers of filter material (3, 4) and joining the superimposed layers together to form continuous seams (10, 11, 12) at the bottom edge (16) and at the straight side edges (13, 14) of the filter bag blanks,
- forming at least two rows of filter bag blanks in which the respective filter bag blanks are alternatingly orientated with respect to their upper and bottom edges (15, 16) and joined along their respective straight side edges (13, 14),
- positioning the at least two rows of filter bag blanks such that a filter bag blank of one row lies immediately adjacent a filter bag blank of the neighbouring row and has the same orientation,
- separating the neighbouring rows from each other along a sinusoidal line formed by the upper and bottom edges of the filter bag blanks of the respective neighbouring rows such that the upper edge of a filter bag blank of one row has the same curvature as the bottom edge of the immediately adjacent filter bag blank of the neighbouring row and each bottom edge is concave, and
- separating each filter bag blank of the separated rows from each other along the straight side edges.

2. A method according to claim 1, characterized in that a desired pattern (22), e.g. a scale for measuring coffee or an emblem of the manufacturer, is embossed into one or both of the filter material layers (3, 4).

3. A trapezium-shaped filter bag manufactured according to the method of claim 1 or 2, characterized in that the filter material layers are of paper.

## Patentansprüche

1. Verfahren zur Herstellung von trapezförmigen Filterbeuteln mit einem gekrümmten oberen Rand (15), einem gekrümmten unteren Rand (16) und zwei geraden seitlichen Rändern (13, 14), die vom unteren Rand zum oberen Rand divergieren,
bei welchem Verfahren Filterbeutel-Zuschnitte gebildet werden, indem
- zwei Schichten von Filtermaterial (3, 4) übereinandergelegt und die übereinandergelegten Schichten so miteinander verbunden werden, daß am unteren Rand (16) und den geraden seitlichen Rändern (13, 14) der Filterbeutel-Zuschnitte kontinuierliche Säume (10, 11, 12) gebildet werden,
- mindestens Zwei Reihen von Filterbeutel-Zuschnitten gebildet werden, wo die entsprechenden Filterbeutel-Zuschnitte abwechselnd in hinsicht auf ihren oberen und unteren Rand (15, 16) orientiert und an ihren geraden betreffenden seitlichen Rändern (13, 14) miteinander verbunden sind,
- die mindestens zwei Reihen von Filterbeutel-Zuschnitten auf solche Weise angeordnet werden, daß ein Filterbeutel-Zuschnitt einer Reihe unmittelbar an einen Filterbeutel-Zuschnitt der benachbarten Reihe angrenzt und die gleiche Ausrichtung hat,
- die benachbarten Reihen an einer durch die oberen und unteren Ränder der Filterbeutel-Zuschnitte der betreffenden benachbarten Reihen gebildeten sinusförmigen Linie auf solche Weise voneinander getrennt werden, daß der obere Rand eines Filterbeutel-Zuschnittes einer Reihe die gleiche Krümmung wie der untere Rand des unmittelbar benachbarten Filterbeutel-Zuschnittes der benachbarten Reihe aufweist und jeder untere Rand konkav ist, und
- die einzelnen Filterbeutel-Zuschnitte der getrennten Reihen an den geraden seitlichen Rändern voneinander getrennt werden.

2. Verfahren gemäß Anspruch 1, dadurch **gekennzeichnet**, daß ein erwünschtes Muster (22), z.B. eine Skala für die Zumessung von Kaffee oder ein Kennzeichen des Herstellers in eine oder beide Filtermaterialschichten (3, 4) eingeprägt wird.

3. Ein nach dem Verfahren von Anspruch 1 oder 2 hergestellter trapezförmiger Filterbeutel, dadurch **gekennzeichnet**, daß die Filtermaterialschichten aus Papier sind.

## Revendications

1. Procédé de fabrication de sacs filtrant de forme trapézoïdale ayant un bord supérieur incurvé (15), un bord de fond incurvé (16) et deux bords latéraux droits (13, 14) qui divergent du bord de fond vers le bord supérieur,
procédé selon lequel des flans de sacs filtrant sont formés en
- superposant deux couches de matière filtrante (3, 4) et en reliant les couches superposées ensemble de façon à former des joints ininterrompus (10, 11, 12) sur le bord de fond (16) et sur les bords latéraux droits (13, 14) des flans de sacs filtrant ;
- formant au moins deux rangées de flans de sacs filtrant dans lesquelles les flans respectifs de sacs filtrant sont orientés en alternance par rapport à leurs bords supérieur et inférieur (15, 16) et raccordés le long de leurs bords latéraux droits respectifs ;
- positionnant au moins deux rangées de flans de sacs filtrant de façon telle qu'un flan de sac filtrant d'une rangée se trouve immédiatement adjacente à un flan de sac filtrant de la rangée voisine et présente la même orientation,
- séparant les rangées avoisinantes l'une de l'autre le long d'une ligne sinusoïdale tracée par les bords supérieur et inférieur des flans de sacs filtrant des rangées avoisinantes respectives de manière que le bord supérieur d'un flan de sacs filtrant d'une rangée présente la même courbure que le bord de fond du flan de sacs filtrant immédiatement adjacent de la rangée avoisinante et chaque bord de fond soit concave, et
- séparant l'un de l'autre le long des bords latéraux droits chaque flan de sac filtrant des rangées séparées.

2. Procédé selon la revendication 1, caractérisé en ce que l'on imprime une configuration désirée (22), par exemple une échelle pour mesurer du café ou un emblème du fabricant, en relief dans l'une ou toutes les deux couches de matière filtrante (3, 4).

3. Sac filtrant de forme trapézoïdale fabriqué selon le procédé de la revendication 1 ou 2, caractérisé en ce que les couches de matière filtrante sont en papier.
